# NEW EUROPEAN PATENT SPECIFICATION

(11) **EP 3 087 846 B2**
(45) Date of publication and mention of the opposition decision: **14.08.2024**
(45) Mention of the grant of the patent: 08.08.2018
(21) Application number: 14875059.9
(22) Date of filing: 22.12.2014
(51) Int. Cl.: A23G 1/00, A23D 9/00, A23G 1/30

(54) **CHOCOLATE-LIKE FOOD PRODUCT FOR BAKING**
SCHOKOLADEÄHNLICHE LEBENSMITTELPRODUKT ZUM BACKEN
PRODUIT ALIMENTAIRE DU TYPE CHOCOLAT DESTINÉ À LA CUISSON AU FOUR

(30) Priority: 24.12.2013 JP 2013265688
(43) Date of publication of application: 02.11.2016
(73) Proprietor: Fuji Oil Holdings Inc., Osaka 598-8540 (JP)
(72) Inventor: TOGASHI, Makoto, Tsukubamirai-shi Ibaraki 300-2436 (JP)
(74) Representative: Becker Kurig & Partner Patentanwälte mbB
(86) International application number: PCT/JP2014/083874
(87) International publication number: WO 2015/098820

(56) References cited:
- EP-A1- 1 668 991
- EP-A1- 1 949 796
- WO-A1-2013/099810
- JP-A- 2000 189 057
- JP-A- 2004 097 171
- JP-A- 2004 254 529
- JP-A- 2008 206 458
- JP-A- 2010 207 197
- JP-A- 2012 110 268
- JP-A- H11 318 337
- JP-A- S52 148 662
- US-A1- 2010 323 079
- US-A1- 2012 315 357

## Description

### Field of the Invention

The invention relates to a chocolate-like food product for baking.

### Description of the Related Art

A typical example of a baked chocolate-like food product is an oily food product that is a chocolate subjected to heating such as baking or the like and that has a different mouthfeel from common chocolate and strong heat resistance. As a method for obtaining the baked chocolate-like food product, there are disclosed a method of allowing a chocolate material surface to absorb moisture and baking the resultant (Patent Document 1), a method of pouring water on a portion of a chocolate material surface and then sprinkling sugar thereon and baking the resultant (Patent Document 2), and a method of baking a chocolate material containing a starch-based starting material and water (Patent Document 3), or a baked confection characterized by being prepared by allowing a chocolate material to contain foam and then shaping and baking to solidify the resultant (Patent Document 4).

There is known a composite food product that utilizes and combines a chocolate-like food product with other food products. An example is a combined food product of a porous food raw material and a flowable food raw material, represented by a composite food product prepared by impregnating a food product such as a baked confection or the like with a chocolate-like food product, wherein the technique for impregnating the porous food raw material with the chocolate-like food product to produce an impregnated food product is known to be roughly classified into two types, a decompression method and a centrifugation method. Among them, the decompression method has been proposed by Patent Documents 5 to 7, etc. In addition, generally, the decompression method is capable of impregnating a food material even having a small pore size, and hence can be used for a foam-containing food material having a wide range of pore sizes. By using such decompression method, it is also possible to impregnate the foam-containing food material densely to its core with an oily confection. On the other hand, the centrifugation method has been proposed in (Patent Document 8), etc.

### Prior-Art Documents

### Patent Documents

Patent Document 1: Japanese Patent Publication No. 2001-245594
Patent Document 2: Japanese Patent Publication No. 2002-223700
Patent Document 3: Japanese Patent Publication No. 2000-189058
Patent Document 4: Japanese Patent Publication No. H10-210934
Patent Document 5: Re-publication of PCT International Application No. WO 97/47207
Patent Document 6: Japanese Patent Publication No. 2004-105069
Patent Document 7: Japanese Patent Publication No. 2004-254529
Patent Document 8: Japanese Patent Publication No. 2002-209530
Patent Document 9: WO 2013/099810.

### SUMMARY OF THE INVENTION

### Problems to Be Solved by the Invention

As mentioned above, many chocolate-like food products for baking are water-containing food products. Hence, in their production process, there is a problem that viscous physical properties are obtained and the process becomes complicated, or a problem that when the aqueous phase is increased, great energy will be required during baking for evaporating the water in the material, and flavor deterioration or a burnt smell occurs due to heating. In addition, owing to inferior keeping quality as compared to chocolate containing no water, the chocolate-like food product for baking must be distributed and stored at low temperature, and there is also a problem that workability deteriorates during transportation or at a delivery destination.

In addition, in the aforementioned food product prepared by impregnating the porous food raw material with the chocolate-like food product, a food product prepared by further baking this food product is also being distributed on the market, and there is a problem that the production process of impregnation with the chocolate-like food product is complicated. Thus, a chocolate-like food product for baking is desired that enables the impregnation to be carried out by a simpler method.

A purpose of the invention is to provide a chocolate-like food product for baking that contains as little water as possible, and that has viscosity in a specific range suitable for coating or impregnation without suffering from a problem of difficult formation of fine particles during preparation of the chocolate-like food product for baking and a problem of increased material viscosity. By baking the chocolate-like food product for baking of the invention, a baked chocolate-like food product is provided that has heat resistance of 40°C or higher, a smooth mouthfeel intrinsic to chocolate from surface to interior, and meltability in the mouth.

### Means for Solving the Problems

As a result of earnest studies to solve the above problems, the inventors have found that a chocolate-like food product for baking, if containing a specific amount of one or two or more saccharides selected from glucose, trehalose and palatinose, can be prepared to have specific viscosity suitable for coating or impregnation without suffering from the problems of difficult formation of fine particles during preparation of the chocolate-like food product for baking and of increased material viscosity, and that a baked chocolate-like food product after baking has heat resistance of 40°C or higher, and is excellent in a soft and smooth mouthfeel intrinsic to chocolate from surface to interior, meltability in the mouth and flavor, thereby completing the invention.

That is, the invention is defined as in the appended claims.

### Effects of the Invention

According to the invention, water is contained as little as possible, and a specific viscosity suitable for coating or impregnation can be prepared without the problem of difficult formation of fine particles during preparation of the chocolate-like food product for baking and the problem of increased material viscosity. A baked chocolate-like food product after baking has heat resistance of 40°C or higher that exceeds a melting point of oils and fats, and production of a baked chocolate-like food product excellent in a soft and smooth mouthfeel intrinsic to chocolate from surface to interior, meltability in the mouth and flavor becomes possible. Moreover, if the chocolate-like food product for baking has viscosity of 2000 cp or less at 20°C, it can be easily combined with a great variety of food raw materials for use at normal temperature without temperature adjustment being carried out. For example, for western confectionery treated by refrigeration or freezing, or frozen confectionery such as ice cream, and frozen foods, the problem of increased material viscosity is also reduced, and the chocolate-like food product for baking can be utilized. In addition, the chocolate-like food product for baking can also be combined with a material of baked confectionery or bread before baking and so on that have been delivered under refrigeration or freezing, in order to declare "hot from the oven" in stores.

### DESCRIPTION OF THE EMBODIMENTS

Hereinafter, the invention is explained in detail.

The chocolate-like food product for baking in the invention refers to that having an oil or fat that forms a continuous phase, and that containing chocolate materials and quasi chocolate materials defined by the Japan Fair Trade Council of Chocolate Industry. However, the chocolate-like food product for baking is not limited to the above, but also includes oil-and-fat-processed foods that utilize cacao mass, cacao, cocoa butter, cocoa butter equivalent, and other oils and fats, etc.

As starting materials that can be used in the invention, arbitrary components used in conventional chocolates, such as cacao mass, cocoa powder, saccharides, milk powder, oils and fats, emulsifiers, flavorings, flavoring agents, coloring agents, etc., can be utilized.

The term "chocolate-like food product for baking" in this specification refers to a chocolate-like food product before baking, a chocolate-like food product that can be shaped by itself and can be baked alone or be baked in combination with other edible substances, and also a chocolate-like food product particularly suitable for that purpose. Examples of the other edible substances include baked confectionery such as cookies, muffins, butter cakes, sponge cakes, biscuits, and wafers, etc., snack confectionery such as puffs and potato chips, etc., and breads. Embodiments of the chocolate-like food product for baking when combined with other foods include one obtained by baking after processes of being formed into a chip shape or a cube shape and dispersed in a bread or cake material, or being applied on a surface, or being poured, filled or impregnated inside, or being placed on top. Moreover, the term "baked chocolate-like food product" in this specification refers to a chocolate-like food product after baking. In addition, the "chocolate-like food product for baking" in a melted state is sometimes simply expressed as "material before baking."

The chocolate-like food product for baking of the invention is a blend containing, as saccharides, one or two or more saccharides selected from glucose, trehalose and palatinose, and as other saccharides if necessary, sugar and lactose, etc. The content of the saccharides is 1 to 30 wt%, preferably 2 to 20 wt%, and more preferably 5 to 15 wt%. If the content of the saccharides is less than 1 wt%, there is a problem that the heat resistance of 40°C or higher cannot be obtained after the chocolate-like food product for baking undergoes a heating treatment, and the chocolate-like food product for baking has a sticky surface and adheres to a finger, and this is therefore unfavorable. In addition, if the content exceeds 30 wt%, formation of fine particles during preparation of the material before baking becomes difficult, and adjustment of the material viscosity to a predetermined value becomes difficult, and this is therefore unfavorable.

The chocolate-like food product for baking of the invention contains, as the saccharides, glucose as an essential component. As the glucose that can be used in the invention, both anhydrous glucose and glucose monohydrate can be used. When anhydrous glucose is used, the content is preferably 1 to 30 wt%, more preferably 2 to 20 wt%, and even more preferably 5 to 15 wt%. In addition, when glucose monohydrate is used, the content is preferably 1 to 30 wt%, more preferably 2 to 15 wt%, and even more preferably 5 to 10 wt%. In either case, if the lower limit is not reached, sufficient heat resistance cannot be obtained, and if the upper limit is exceeded, formation of fine particles during preparation of the material before baking becomes difficult, and adjustment of the material viscosity to a predetermined value becomes difficult, and these are therefore unfavorable. Moreover, to achieve both heat resistance and viscosity in an acceptable range, anhydrous glucose and glucose monohydrate can also be used in proper combination with glucose in a range of 1 to 30 wt%.

The chocolate-like food product for baking of the invention contains lecithin in addition to 1 to 30 wt% of the saccharides. The content of lecithin is 0.1 to 0.4 wt%, preferably 0.2 to 0.4 wt%, and more preferably 0.2 to 0.3 wt%. When the content of lecithin is less than 0.1 wt%, the viscosity of the baked chocolate-like food product becomes so high that the shaping, coating or impregnating operation becomes difficult, and polyglycerin-condensed ricinoleate (hereinafter simply called PGPR) is therefore preferably added as a viscosity modifier. If the content of lecithin exceeds the upper limit, the heat resistance of the baked chocolate-like food product after heating treatment is reduced, and the target heat resistance of 40°C or higher cannot be obtained, and this is therefore unfavorable. For preparation of viscosity of materials of chocolates, the invention contains, in addition to lecithin, PGPR in an amount of 0.1 to 0.5 wt%, preferably 0.1 to 0.3 wt%, and more preferably 0.1 to 0.2 wt%. By containing PGPR in addition to lecithin, there is an advantage that the viscosity of the chocolate-like food product for baking can be reduced without reducing the heat resistance after heating treatment. That is, when the target heat resistance of 40°C or higher is to be obtained using lecithin alone, it is necessary to set the viscosity of the chocolate-like food product for baking to relatively high, and the shaping or coating operation tends to become difficult. However, by the combination with PGPR, the viscosity can be set low. If the content of PGPR is less than the lower limit, the effect of reducing the viscosity of the chocolate-like food product for baking is insufficient; in contrast, even if the content exceeds the upper limit, the viscosity reduction effect cannot be improved any further, and these are therefore unfavorable.

The viscosity of the chocolate-like food product for baking of the invention is 2000 cp or less in terms of a viscosity measurement value at a controlled temperature of 45°C after complete melting of the oil or fat in the chocolate-like food product for baking. If the material viscosity exceeds 2000 cp, the suitability for coating and impregnation is poor, and this is therefore unfavorable. For coating and impregnation of baked confectionery, snacks and breads, the viscosity is preferably 200 to 2000 cp, more preferably 500 to 1500 cp, in terms of the viscosity measurement value at the controlled temperature of 45°C after complete melting of the oil or fat in the material. If the material viscosity is less than 200 cp, there is a problem that the oil and fat content is increased to reduce the flavor of chocolates, and this is therefore unfavorable.

In addition, in view of the temperature adjustment during operation being easy or unnecessary, and in view of the impregnation of the food raw material to be combined with the chocolate-like food product for baking being easily performed, the viscosity of the chocolate-like food product for baking of the invention is preferably 2000 cp or less in terms of a viscosity measurement value at a controlled temperature of 20°C after complete melting of the oil or fat in the chocolate-like food product for baking. The viscosity is more preferably 200 to 2000 cp, even more preferably 500 to 1500 cp. If the material viscosity is less than 200 cp, there is a problem that the oil and fat content is increased to reduce the flavor of chocolates, and this is therefore unfavorable.

As the oils and fats that can be blended with the chocolate-like food product for baking of the invention, in addition to cocoa butter, various animal and plant oils and fats can be utilized. Examples as a starting material include vegetable oil or fat, such as rapeseed oil, soybean oil, sunflower seed oil, cottonseed oil, peanut oil, rice bran oil, corn oil, safflower oil, olive oil, kapok oil, sesame oil, evening primrose oil, palm oil, Shea fat, sal fat, cocoa butter, coconut oil, palm kernel oil, etc.; animal oil or fat, such as milk fat, lard, fish oil, whale oil, etc.; as well as oils obtained by subjecting the above oils and fats to hydrogenation, fractionation, and transesterification, and also mixed oils and fats thereof, etc.

An emulsifier other than lecithin and PGPR can be properly utilized within a range that achieves both the viscosity and the heat resistance after heating treatment of the chocolate-like food product for baking. For example, sucrose fatty acid esters, sorbitan fatty acid esters, polyglyceryl fatty acid esters, fractionated lecithin and ammonium phosphate, etc. can be utilized. The purpose of use includes suppression of bloom or prevention of occurrence of graining as a measure against exposure to temperatures equal to or higher than a melting point of oils and fats during storage and transportation.

The chocolate-like food product for baking of the invention can be produced by a method of producing common chocolates. For example, heated and melted cacao mass or oils and fats and an emulsifier such as lecithin are added to a solid powder starting material such as cocoa powder, saccharides, milk powder, etc., and the resultant is mixed using a Hobart mixer or the like, so as to prepare a paste-like material having an oil and fat content of 20 to 30 wt%. The obtained material is formed into fine particles using a refiner such as a roll so as to obtain smooth particles having a mean particle size of 15 to 30 µm. Next, the resultant is subjected to conching (stirring and mixing) while its temperature is maintained at 40 to 70°C, so as to be formed into a paste-like shape. Then, oils and fats, an emulsifier such as PGPR or the like and a flavoring, etc. are properly added and mixed, so as to obtain a predetermined chocolate-like food product for baking. Moreover, if the conching temperature exceeds 80°C, the viscosity of the chocolate-like food product for baking strikingly increases. Therefore, the conching of the chocolate-like food product for baking of the invention is preferably performed at 40 to 70°C.

In preparation of the chocolate-like food product for baking of the invention, the mean particle size obtained by the fine particle formation by means of a refiner or the like is preferably 15 to 30 µm, more preferably 18 to 25 µm, and even more preferably 18 to 22 µm. If the mean particle size exceeds 30 µm, a slightly coarse mouthfeel is given, and this is therefore unfavorable. In addition, if the material is increased in viscosity in the conching process, lumps are formed, or the material more easily adheres to a wall surface of the mixer and takes a long time to form a smooth paste-like shape, or the viscosity of the ultimately prepared chocolate-like food product for baking becomes too high, thus hindering the subsequent shaping process. Accordingly, a blending setting that causes an increase in material viscosity in the conching process to be within an acceptable range is important. The composition of the chocolate-like food product for baking of the invention is suitable for such blending setting.

The water content of the chocolate-like food product for baking of the invention is less than 5 wt%. The water content is preferably less than 2 wt%, more preferably less than 1 wt%. If the water content exceeds 5 wt%, the problem of increased viscosity or lump formation during preparation of the material as described above more easily occurs, and this is therefore unfavorable. In addition, the oil and fat content of the chocolate-like food product for baking of the invention is 35 to 55 wt%, preferably 40 to 50 wt%, and more preferably 42 to 48 wt%. If the oil and fat content is less than 35 wt%, suitability for thinly applied coating tends to be lost, or workability of impregnation tends to deteriorate, and this is therefore unfavorable. In addition, if the oil and fat content exceeds 55 wt%, the chocolate-like food product for baking has a thinner flavor and has an oily flavor, and this is therefore unfavorable.

The baked chocolate-like food product obtained by baking the chocolate-like food product for baking of the invention has heat resistance so that a chocolate surface is not sticky and chocolates do not adhere to each other in a temperature range of 40 to 90°C that is equal to higher than the melting point of oils and fats, and the baked chocolate-like food product is excellent in a soft and smooth mouthfeel intrinsic to chocolate from surface to interior, meltability in the mouth and flavor.

After shaping, coating or impregnation, etc., the chocolate-like food product for baking of the invention is subjected to a heating treatment at preferably 80 to 160°C, more preferably 100 to 130°C, and then cooled, thereby obtaining the baked chocolate-like food product. By such heat treatment, a glassy structure derived from one or two or more saccharides selected from glucose, trehalose and palatinose is formed. As a result, heat resistance may be provided even in the temperature range of 40 to 90°C at which the oil or fat in the chocolate-like food product for baking melts. If the heating treatment temperature is lower than 80°C, the desired heat resistance cannot be obtained, and this is therefore unfavorable. In contrast, if the heating treatment temperature exceeds 160°C, a hard mouthfeel is obtained, the desired soft and smooth mouthfeel cannot be obtained, and the chocolate flavor is also reduced, and this is therefore unfavorable. Moreover, the cooling after the heat treatment can be leaving to cool in a refrigerator at 0 to 15°C, or cold air cooling by a cooling tunnel or the like, leaving to cool at room temperature of 30°C or lower, etc.

Time of the above heat treatment is preferably 30 minutes or less, more preferably from 1 to 20 minutes, and even more preferably 5 to 15 minutes. The heating time varies depending on weight or shape of the chocolate-like food product for baking. For example, the heating preferably takes place for 5 to 10 minutes for thin shaping and for thin coating to baked confectionery or breads, and preferably takes place for 10 to 20 minutes for thick shaping or for impregnation of a large puff material. If the heating time is short, the desired heat resistance cannot be obtained, and this is therefore unfavorable. In addition, if the heating time is long, a hard mouthfeel is obtained, the desired soft and smooth mouthfeel cannot be obtained, and the chocolate flavor is also reduced, and this is therefore unfavorable.

A heating treatment method can be performed by use of, e.g., an oven or a microwave oven, etc. In addition, hot air drying using a dryer or the like, or various heating means such as infrared heating and microwave heating, etc. can be used if the above heating temperature and heating time are satisfied.

In addition, in the invention, cooling and solidification can also be carried out prior to the above heat treatment. The cooling and solidification means to pour the prepared chocolate-like food product for baking in the melted state into a mold to shape it, or to use it to coat or impregnate a baked confection or bread, and then to cool the resultant using a refrigerator at 0 to 15°C or a cooling tunnel to cause it to solidify. By such cooling and solidification, the chocolate surface after cooling can be made smooth. Then, by performing the same heating treatment and cooling as above, a baked chocolate-like food product having a smooth surface can be obtained.

### Examples

Hereinafter, the invention is explained in more detail by demonstrating examples. Moreover, in the examples, both "%" and "part" mean a weight basis.

### <Method of Producing Baked Chocolate-like Food Product>

A chocolate-like food product for baking was prepared by using compositions described in Table 1 and performing roll application and conching by a conventional method. This chocolate-like food product for baking was measured for viscosity at each temperature, and then 7 g thereof was filled in an aluminum cup, followed by baking in an oven at 110°C for 15 minutes.

### (Measurement of Viscosity)

A product temperature of the chocolate-like food product for baking was adjusted to each temperature, and the viscosity was measured using a BM-type viscometer (made by Tokyo Keiki Inc.). When the viscosity was 10,000 cp or less, the measurement was performed using a rotor No. 3 at 12 rpm; when the viscosity was more than 10,000 cp, the measurement was performed using a rotor No. 4 at 12 rpm.

### <Evaluation Method>

### (1) Heat resistance

A surface state of the chocolate was evaluated after cooling and a 2-hour temperature maintenance at 50°C were carried out subsequent to baking.
○: Not sticky
×: Sticky

### (2) Mouthfeel

The chocolate after baking was evaluated according to the following criteria.
○: The chocolate provided a good mouthfeel and had good meltability in the mouth.
×: The chocolate had poor meltability in the mouth.

### (Example 1)

A baked chocolate-like food product was produced using the composition described in Table 1 that was obtained by blending 7.5% of anhydrous glucose (trade name: "TDA-C," made by San-ei Sucrochemical Co., Ltd.), 0.3% of lecithin and 0.2% of PGPR. A fractionated oil or fat (made by Fuji Oil Co., Ltd.; trade name: "Melano STS") of hydrogenated palm oil was used as the oil and fat content. The melting point of the blended oil and fat part was 34°C. In addition, the viscosity at 45°C was 2000 cp or less, but the viscosity at 20°C was unmeasurable. The evaluation results are summarized in Table 2.

### (Example 2)

A baked chocolate-like food product was produced using the composition described in Table 1 that was obtained by blending 10.0% of anhydrous glucose (trade name: "TDA-C," made by San-ei Sucrochemical Co., Ltd.), 0.3% of lecithin and 0.2% of PGPR. Rice bran oil and refined palm olein (made by Fuji Oil Co., Ltd.; trade name: "Palm Ace 10N"; iodine value: 67) were used as the oil and fat content. The melting point of the blended oil and fat part was 10°C or lower. In addition, the viscosity at 45°C and at 20°C was 2000 cp or less. The evaluation results are summarized in Table 2.

### (Comparative Example 1)

A baked chocolate-like food product was produced using the composition described in Table 1 that contained no anhydrous glucose, 0.3% of lecithin and no PGPR. A fractionated oil or fat (made by Fuji Oil Co., Ltd.; trade name: "Melano STS") of hydrogenated palm oil was used as the oil and fat content. The melting point of the blended oil and fat part was 34°C. In addition, the viscosity at 45°C was 2400, and the viscosity at 20°C was unmeasurable. The evaluation results are summarized in Table 2.

### (Comparative Example 2)

A baked chocolate-like food product was produced using the composition described in Table 1 that contained no anhydrous glucose, 0.3% of lecithin and 0.2% of PGPR. Rice bran oil and refined palm olein (made by Fuji Oil Co., Ltd.; trade name: "Palm Ace 10N"; iodine value: 67) were used as the oil and fat content. The melting point of the blended oil and fat part was 10°C or lower. In addition, the viscosity at 45°C and at 20°C was 2000 cp or less. The evaluation results are summarized in Table 2.

**[Table 1]**

| | Example 1 | Example 2 | Comparative Example 1 | Comparative Example 2 |
|---|---|---|---|---|
| Glucose | 7.5 | 10.0 | - | - |
| Sugar | 27.0 | 22.4 | 34.5 | 32.4 |
| Whole milk powder | 13.4 | 13.0 | 13.4 | 13.0 |
| Cacao mass | 5.6 | 5.6 | 5.6 | 5.6 |
| Cocoa | 5.0 | 5.0 | 5.0 | 5.0 |
| Melano STS | 41.5 | - | 41.5 | - |
| Rice bran oil | - | 40.0 | - | 40.0 |
| Refined palm olein | - | 4.0 | - | 4.0 |
| Lecithin | 0.3 | 0.3 | 0.3 | 0.3 |
| PGPR | 0.2 | 0.2 | - | 0.2 |
| Flavoring | 0.0 | 0.0 | 0.0 | 0.0 |
| Viscosity (45°C) | 1000 cp | 1100 cp | 2400 cp | 1200 cp |
| Viscosity (20°C) | Unmeasurable | 1400 cp | Unmeasurable | 1700 cp |
| •PGPR (trade name: CRS75, made by Sakamoto Yakuhin Kogyo Co., Ltd.) | | | | |

**[Table 2]**

| | Example 1 | Example 2 | Comparative Example 1 | Comparative Example 2 |
|---|---|---|---|---|
| Heat resistance | ○ | ○ | × | × |
| Mouthfeel | ○ | ○ | ○ | ○ |

### Industrial Applicability

According to the invention, a chocolate-like food product for baking is obtained that has viscosity in a specific range suitable for coating or impregnation without suffering from the problem of increased material viscosity. By utilizing such chocolate-like food product for baking, with no addition of water or an aqueous starting material thereto and no spraying of water onto a surface thereof, a baked chocolate-like food product imparted with heat resistance can be provided.

## Claims

1. A chocolate-like food product for baking, having a water content of less than 5 wt%, containing 1 to 30 wt% of at least one saccharide selected from the group consisting of glucose, trehalose and palatinose, and having viscosity of 2000 cp or less at 45°C,
wherein the chocolate-like food product contains, as the saccharides, anhydrous glucose and/or glucose monohydrate as an essential component, wherein a content of anhydrous glucose or glucose monohydrate or a mixture of both is 1 to 30 wt%,
wherein an oil and fat content in the chocolate-like food product is 35 to 55 wt%, and
wherein the chocolate-like food product contains 0.1 to 0.4 wt% of lecithin, and 0.1 to 0.5 wt% of polyglycerin-condensed ricinoleate.

2. The chocolate-like food product for baking according to claim 1, having viscosity of 2000 cp or less at 20°C.

3. A baked chocolate-like food product, using the chocolate-like food product for baking according to any one of claim 1 to claim 2.

4. A composite food product, using the chocolate-like food product for baking according to any one of claim 1 to claim 3.

5. A method of producing the baked chocolate-like food product according to claim 3, comprising subjecting the chocolate-like food product for baking according to any one of claim 1 to claim 2 to a heating treatment at 80 to 160°C.

6. A method of producing the composite food product according to claim 4, comprising subjecting a food product that uses the chocolate-like food product for baking according to any one of claim 1 to claim 2 to a heating treatment at 80 to 160°C.

## Patentansprüche

1. Schokoladenartiges Nahrungsmittelprodukt zum Backen mit einem Wassergehalt von weniger als 5 Gew.-%, welches 1 bis 30 Gew.-% mindestens eines Saccharids ausgewählt aus der Gruppe, bestehend aus Glucose, Trehalose und Palatinose enthält, und eine Viskosität von 2000 cP oder weniger bei 45 °C aufweist,
wobei das schokoladenartige Nahrungsmittelprodukt als die Saccharide wasserfreie Glucose und/oder Glucose-monohydrat als eine wesentliche Komponente enthält, wobei ein Gehalt an wasserfreier Glucose oder Glucose-monohydrat oder einer Mischung von beiden 1 bis 30 Gew.-% beträgt,
wobei ein Öl- und Fettgehalt in dem schokoladenartigen Nahrungsmittelprodukt 35 bis 55 Gew.-% beträgt, und
wobei das schokoladenartige Nahrungsmittelprodukt 0,1 bis 0,4 Gew.-% Lecithin, und 0,1 bis 0,5 Gew.-% Polyglycerin-kondensiertes Ricinoleat enthält.

2. Schokoladenartiges Nahrungsmittelprodukt zum Backen nach Anspruch 1 mit einer Viskosität von 2000 cP oder weniger bei 20 °C.

3. Gebackenes, schokoladenartiges Nahrungsmittelprodukt, welches das schokoladenartige Nahrungsmittelprodukt zum Backen nach einem der Ansprüche 1 bis 2 nutzt.

4. Zusammengesetztes Nahrungsmittelprodukt, welches das schokoladenartige Nahrungsmittelprodukt zum Backen nach einem der Ansprüche 1 bis 3 nutzt.

5. Verfahren zum Herstellen des gebackenen, schokoladen-artigen Nahrungsmittelprodukts nach Anspruch 3, umfassend ein Unterziehen des schokoladenartigen Nahrungsmittelprodukts zum Backen nach einem der Ansprüche 1 bis 2 einer Wärmebehandlung bei 80 bis 160 °C.

6. Verfahren zum Herstellen des zusammengesetzten Nahrungsmittelprodukts nach Anspruch 4, umfassend ein Unterziehen eines Nahrungsmittelprodukts, welches das schokoladenartige Nahrungsmittelprodukt zum Backen gemäß einem der Ansprüche 1 bis 2 nutzt, einer Wärmebehandlung bei 80 bis 160 °C.

## Revendications

1. Produit alimentaire de type chocolat pour cuisson au four, ayant une teneur en eau de moins de 5 % en poids, contenant 1 à 30 % en poids d'au moins un saccharide choisi dans le groupe constitué par le glucose, le tréhalose et le palatinose et ayant une
viscosité de 2000 cp ou moins à 45 °C, où le produit alimentaire de type chocolat contient, comme saccharides, du glucose anhydre et/ou du monohydrate de glucose comme composant essentiel, où une teneur de glucose anhydre ou de monohydrate de
glucose ou d'un mélange des deux est de 1 à 30 % en poids,
dans lequel une teneur en huile et en graisse dans le produit alimentaire de type chocolat est de 35 à 55 % en poids, et dans lequel le produit alimentaire de type chocolat contient 0,1 à 0,4 % en poids de lécithine, et 0,1 à 0,5 % en poids de ricinoléate condensé à la polyglycérine.

2. Produit alimentaire de type chocolat pour cuisson au four selon la revendication 1, ayant une viscosité de 2000 cp ou
moins à 20 °C.

3. Produit alimentaire de type chocolat cuit au four, utilisant le produit alimentaire de type chocolat pour la cuisson au four selon l'une quelconque de la revendication 1 à la revendication 2.

4. Produit alimentaire composite, utilisant le produit alimentaire de type chocolat pour la cuisson au four selon l'une quelconque de la revendication 1 à la
revendication 3.

5. Procédé de production du produit alimentaire de type chocolat cuit au four selon la revendication 3, comprenant la soumission du produit alimentaire de type chocolat pour la cuisson au four selon l'une quelconque de la revendication 1 à la revendication 2 à un traitement à la chaleur à 80 à 160 °C.

6. Procédé de production du produit alimentaire composite selon la revendication 4, comprenant la soumission d'un produit alimentaire qui utilise le produit alimentaire de type chocolat pour la cuisson au four selon l'une quelconque de la revendication 1 à la revendication 2 à un traitement à la chaleur à 80 à 160 °C
